# EUROPÄISCHE PATENTSCHRIFT

(11) **EP 0 873 827 B1**
(45) Veröffentlichungstag und Bekanntmachung des Hinweises auf die Patenterteilung: **07.08.2002**
(21) Anmeldenummer: 98830022.4
(22) Anmeldetag: 21.01.1998
(51) Int. Cl.: B26D 1/00, B26F 3/12, B29C 44/56, C08J 9/36

(54) **Verfahren zum Schneiden von Polyurethan-Hartschaumstoff mittels einer beheizten Drahtsäge**
Process for sawing polyurethan rigid foam using a heated wire saw
Procédé de découpage de mousse rigide de polyuréthane au moyen d'un fil chauffé

(30) Priorität: 22.04.1997 IT MI970948
(43) Veröffentlichungstag der Anmeldung: 28.10.1998
(73) Patentinhaber: Szücs, Ildiko, 20123 Milano (IT)
(72) Erfinder: Szücs, Ildiko, 20123 Milano (IT)

(56) Entgegenhaltungen:
- GB-A- 2 108 037
- US-A- 4 508 774
- US-A- 4 608 893
- US-A- 4 812 368
- US-A- 5 338 765

## Beschreibung

Die vorliegende Erfindung ein Verfahren zum Schneiden von Polyurethan-Hartschaumstoff mittels einer beheizten Drahtsäge gemäß dem Oberbegriff des Anspruchs 1 (siehe z.B. US-A-4 508 774). Auf diese Weise werden augenblicklich Isolierplatten und Schaumstoffbriketts hergestellt, welche besonders im Bereich des Blumenschmucks eingesetzt werden, da Polyurethan-Schaumstoff leicht von den Stielen der Trocken- oder Kunstblumen durchbohrt werden kann.

Ein Nachteil der momentan auf dem Markt erhältlichen Erzeugnisse besteht darin, daß die Oberflächen nach dem Schneiden voller Reststaub und elektrostatisch geladen sind, was ihre Verwendung schwierig macht und wenig überzeugende Ergebnisse beim Zusammenkleben erzielt, wie es bei verschiedenen Formen der Verwendung erforderlich sein kann.

Es wurde versucht, diese Nachteile zu beseitigen beispielsweise durch ein Verblasen mit Druckluft nach dem Schneidevorgang. Dieser weitere Arbeitsvorgang bringt jedoch höhere Kosten mit sich und macht es außerdem erforderlich, eine Vorrichtung zur Verfügung zu stellen, welche den Staub auffängt. Die Ergebnisse sind ferner nicht so zufriedenstellend, wie dies zu hoffen wäre.

Der Zweck vorliegender Erfindung besteht darin ein Verfahren um Schneiden von Polyurethan-Hartschaumstoff zu erzeugen, so daß die geschnittene Oberfläche vom Polyurethan-Hartschaumstoffprodukte gänzlich frei von Staub und elektrostatischer Ladung ist.

Der aktuelle Stand der Technik erlaubt auch ein Schneideverfahren für Polystyrolschaum mittels heißen Drahtes, Der Schnitt erfolgt durch ein Schmelzen des Materials, welches mit dem heißen Draht in Berührung kommt (bei Polystyrol handelt es sich um ein thermoplastisches Material).

Bis heute ist noch nie ein Verfahren mit heißem Draht zum Schneiden von Polyurethan-Schaumstoff zur Anwendung gelangt.

Gegenstand der Erfindung ist ein Verfahren wie dies im Patentanspruch 1 erläutert wird.

Zusammengefaßt sieht das neue Verfahren einen Schneidevorgang für Polyurethan-Schaumstoff vor, zu Beginn der Aufschäumungsphase, anhand eines auf hohe Temperatur erhitzten Drahtes, welcher in Schwingung versetzt wird.

Die Temperatur des Drahtes beträgt vorzugsweise zwischen 200 und 1.000°C.

Die Schwingungsfrequenz liegt normalerweise zwischen 200 und 2.800 Schwingungen in der Minute.

Mit der Erfindung erhält man Produkte in Platten- oder Brikettform mit durch Schnitt erzielten Oberflächen, welche besonders gut feinbearbeitet sind, nahezu staubfrei und praktisch frei von elektrostatischer Ladung oder sogar vollkommen staubfrei und damit besonders geeignet für die Verwendung als Kissen für Blumengestecke aus Trocken- oder Kunstblumen oder als Isoliermaterial, welches außerdem besonders gute Klebeeigenschaften besitzt.

Eine detailgenauere Beschreibung der Erfindung findet sich nachfolgend unter Verweis auf die beigefügte Abbildung, welche schematisch ein Schneidegerät erläutert.

Polyurethan-Schaumstoffblöcke werden nach der einen oder anderen bekannten Verfahrensweise hergestellt, welche aus diesem Grund hier nicht näher beschrieben werden.

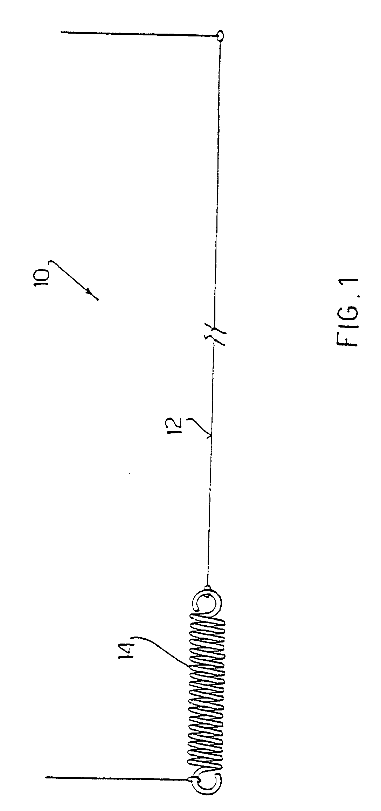

Aufgrund einer nicht grundlegenden Eigenschaft der Erfindung ist es während des Mischvorgangs der Grundbestandteile oder auf jeden Fall vor dem Aufschäumen möglich, dem Gemisch Feuerhemmstoffe beizumengen, wie zum Beispiel Phosphorsäureester. Der so erhaltene Block wird dann einem Schneidevorgang mittels Draht zugeleitet. Die Schneidevorrichtung ist in Abbildung 1 schematisch dargestellt und mit Ziffer 10 bezeichnet. Bei dem mit Ziffer 12 benannten Draht handelt es sich normalerweise um einen gespannten Metalldraht, auf den eine mit Ziffer 14 bezeichnete Feder aufgesetzt wird, um die Ausdehnung, Längsdehnung und Schwingung auszugleichen. Das Erwärmen des Drahtes erfolgt vorzugsweise durch elektrischen Strom, indem der Draht einer elektrischen Spannung ausgesetzt wird, die vorzugsweise in einem Bereich zwischen 20 und 90 Volt liegen sollte. Die Geschwindigkeit, mit der der Schnitt ausgeführt wird und/oder die Temperatur des Drahtes werden auf das spezifische Eigengewicht des zu schneidenden Schaumstoffes abgestimmt. Die Temperatur des Drahtes liegt vorzugsweise zwischen 200 und 1.000 °C. Der Draht wird normalerweise mit einer Frequenz von 200 bis 2.800 Schwingungen in der Minute in Schwingung versetzt und zwar vorzugsweise in der Längsrichtung des Drahtes. Es wird eine relative Bewegung festgelegt für das Verschieben zwischen Draht und Polyurethan-Schaumstoffblock.

Eine weitere Eigenschaft der vorliegenden Erfindung besteht darin, daß jeweils am Ende eines Schneidevorgangs der mit Ziffer 12 bezeichnete Draht weiter erhitzt wird, bis alle auf ihm abgelagerten Restpartikelchen vollständig verbrannt sind oder bis zur mechanischen Beseitigung der verbliebenen Rückstände, bevor ein weiterer Schneidevorgang oder eine Teilung ausgeführt werden.

## Patentansprüche

1. Verfahren zum Schneiden von Polyurethan-Hartschaumstoff mittels einer beheizten Drahtsäge (10), wobei der heiße Draht (12) in Schwingung versetzt wird, und für den eine relative Bewegung für das Verschieben zwischen dem zu schneidenden Polyurethan-Hartschaumstoff und dem heißen Draht (12) festgelegt wird, **dadurch gekennzeichnet, daß** in regelmäßigen Abständen der Schneidevorgang mit heißem Draht (12) einem Verbrennungsvorgang oder einem mechanischen Arbeitvorgang unterzogen wird, mit dem auf demselben abgelagerte Rückstände beseitigt werden.

2. Verfahren gemäß Patentanspruch 1, **dadurch gekennzeichnet, daß** das Erhitzen des Drahtes (12) durch ein Anlegen elektrischer Spannung mit entsprechender Potentialdifferenz am Draht (12) erfolgt.

3. Verfahren gemäß Patentanspruch 1, **dadurch gekennzeichnet, daß** vor dem Schneidevorgang dem Gemisch zur Herstellung von Polyurethan-Schaumstoff ein Feuerhemmstoff beigemengt wird.

4. Verfahren gemäß Patentanspruch 1, **dadurch gekennzeichnet, daß** die Geschwindigkeit des Verschiebens und die Temperatur des Drahtes (12) auf das spezifische Eigengewicht des Polyurethan-Schaumstoffes abgestimmt werden.

5. Verfahren gemäß Patentanspruch 1, **dadurch gekennzeichnet, daß** die relative Geschwindigkeit, mit der der Polyurethan-Schaumstoffblock gegen den Schneidedraht (12) verschoben wird, zwischen 20 und 1000 mm/Minute beträgt.

6. Verfahren gemäß Patentanspruch 1, **dadurch gekennzeichnet, daß** die Temperatur des Schneidedrahtes (12) zwischen 200°C und 1000°C beträgt.

7. Verfahren gemäß Patentanspruch 1, **dadurch gekennzeichnet, daß** die an den Schneidedraht (12) angelegte Spannung zwischen 20 und 90 Volt liegt.

8. Verfahren gemäß Patentanspruch 1, **dadurch gekennzeichnet, daß** der Stromverbrauch des Schneidedrahtes (12) zwischen 2 und 12 Ampere beträgt.

9. Verfahren gemäß Patentanspruch 1, **dadurch gekennzeichnet, daß** der Draht (12) mit einer Frequenz von 200 bis 2800 Schwingungen in der Minute in Schwingung versetzt wird.

10. Verfahren gemäß Patentanspruch 1, **dadurch gekennzeichnet, daß** die staubfreie Schnittoberfläche durch Schmelzen und Brennen entsteht.

## Claims

1. Procedure to cut rigid polyurethane foam by means of a super-heated metal saw (10), during which the metal wire (12) is made to oscillate, when hot, generating a relative displacement motion between the rigid polyurethane foam to be cut and the super-heated metal wire (12), **characterised in that**, at regular intervals, the cutting process with the super-heated metal wire (12) is subjected to a combustion process or to mechanical processing by which the deposited residues are removed.

2. Procedure, according to claim 1 of the patent, **characterised in that** the metal wire (12) is heated by passing electric current through the wire (12) with the relative difference in potential.

3. Procedure, according to claim 1 of the patent, **characterised in that**, a fire-resistant substance is added to the mixture used to produce the rigid polyurethane foam before the cutting process.

4. Procedure, according to claim 1 of the patent, **characterised in that** the rate of displacement and the temperature of the metal wire (12) are synchronised with the respective specific weight of the rigid polyurethane foam.

5. Procedure, according to claim 1 of the patent, **characterised in that**, the relative speed with which the block of rigid polyurethane foam is forced against the metal wire (12) for the cutting operation is equal to 20 - 1,000 mm/minute.

6. Procedure, according to claim 1 of the patent, **characterised in that** the temperature of the metal cutter wire (12) lies between 200 and 1,000°C.

7. Procedure, according to claim 1 of the patent, **characterised in that** the voltage applied to the metal cutter wire (12) lies between 20 and 90 Volts.

8. Procedure, according to claim 1 of the patent, **characterised in that** the current consumption of the metal cutter wire (12) lies between 2 and 12 Amperes.

9. Procedure, according to claim 1 of the patent, **characterised in that** the metal wire (12) is made to oscillate with a frequency from 200 up to 2,800 oscillations per minute.

10. Procedure, according to claim 1 of the patent, **characterised in that** that the powder-free processed surface is formed by means of fusion and burning.

## Revendications

1. Procédure pour la coupe de polyuréthanne expansé rigide au moyen d'une scie métallique surchauffée (10), pendant laquelle, à chaud, le fil métallique (12) est fait osciller en déterminant un mouvement relatif pour le déplacement entre le polyuréthanne expansé rigide à couper et le fil métallique surchauffé (12), **caractérisée par le fait que**, à distances régulières, le procédé de coupe avec le fil métallique surchauffé (12) est soumis à un procédé de combustion c'est-à-dire à un procédé d'usinage mécanique par lequel sont éliminés les restes mêmes qui s'y sont déposés.

2. Procédure selon la revendication du brevet 1, **caractérisée par le fait que** le chauffage du fil métallique (12) se produit par l'application au fil (12) de courant électrique avec différence de potentiel relative.

3. Procédure selon la revendication du brevet 1, **caractérisée par le fait qu'**une substance ignifuge pour la production du polyuréthanne expansé rigide est ajoutée au mélange avant le procédé de coupe.

4. Procédure selon la revendication du brevet 1, **caractérisée par le fait que** la vitesse de déplacement et la température du fil métallique (12) sont synchronisées avec le poids propre spécifique du polyuréthanne expansé rigide.

5. Procédure selon la revendication du brevet 1, **caractérisée par le fait que** la vitesse relative avec laquelle le bloc de polyuréthanne expansé rigide est poussé contre le fil métallique pour la coupe (12) est de 20 - 1000 mm/minute.

6. Procédure selon la revendication du brevet 1, **caractérisée par le fait que** la température du fil métallique pour la coupe (12) est comprise entre 200 et 1000°C.

7. Procédure selon la revendication du brevet 1, **caractérisée par le fait que** la tension appliquée au fil métallique pour la coupe (12) est comprise entre 20 et 90 Volt.

8. Procédure selon la revendication du brevet 1, **caractérisée par le fait que** la consommation de courant du fil métallique pour la coupe (12) est comprise entre 2 et 12 Ampère.

9. Procédure selon la revendication du brevet 1, **caractérisée par le fait que** le fil métallique (12) est fait osciller avec une fréquence de 200 jusqu'à 2800 oscillations par minute.

10. Procédure selon la revendication du brevet 1, **caractérisée par le fait que** la surface usinée dépourvue de poussière se forme à travers la fusion et la brûlure.
